# EUROPEAN PATENT APPLICATION

(11) **EP 4 847 279 A1**
(43) Date of publication of application: **02.12.2026**
(21) Application number: 26181884.3
(22) Date of filing: 29.05.2026
(51) Int. Cl.: B60C 25/05, B60C 25/138

(54) **TIRE CHANGER AND PROCESS FOR INSTALLING OR MAINTAINING A MOTOR OF SAID TIRE CHANGER**

(30) Priority: 30.05.2025 IT 202500012625
(71) Applicant: VEHICLE SERVICE GROUP ITALY S.R.L., 44020 Ostellato (FE) (IT)
(72) Inventor: SIGNORELLI, Paolo, I-42010 Rio Saliceto (RE) (IT); BATTELLI, Enrico, I-41012 Carpi (MO) (IT); RUSPAGGIARI, Davide, I-41012 Carpi (MO) (IT); CASALETTI, Stefano, I-42017 Novellara (RE) (IT)
(74) Representative: PGA S.p.A., Milano, Succursale di Lugano

(57) **Abstract**

The present invention relates to a tire changer (100) for mounting and/or demounting a tire of a wheel of a vehicle, wherein the tire changer comprises a base (2) presenting: a case (60) delimiting a compartment (V), a wheel holder (3) emerging from the case, a mechanical transmission (40) configured to allow rotation of the wheel holder, a motor (M) connected to the mechanical transmission (40). The tire changer further comprises a support element (1) configured to support the motor (M) in the compartment (V) and configured to define: a lock condition in which the support element fixes the motor (M) in a predetermined operating position relative to the transmission (40), a release condition in which the support element (1) is configured to guide a movement of the motor (M) along a direction exiting from the compartment (V).

## Description

### FIELD OF THE INVENTION

The present invention relates to a tire changer for mounting or demounting a tire of wheels of vehicles, as well as a process for installing and/or maintaining a motor of said tire changer.

The present invention may find application in the field of construction of equipment for the servicing and repair of transport vehicles. The present invention may further find application in the automotive field for replacing tires of motor vehicles or for the first-time mounting of a tire on a rim of a motor vehicle. The present invention may however be employed, in general terms, in all fields requiring the mounting and/or demounting of tires from rims for various types of vehicles, including trucks, agricultural machinery or motorcycles.

### BACKGROUND ART

Tire changers for mounting and demounting tires from rims of vehicles are known. Tire changers are provided with a wheel holder, configured to receive and engage a wheel of a vehicle, and a plurality of tools configured to operate on the wheel for mounting/demounting the tire. The wheel holder comprises a main shaft emerging from a base of the tire changer along a vertical axis and a turnplate, opposed to the base, configured to receive the rim of the wheel in support. The wheel is locked against the turnplate by means of specific cones which, on the one hand, act in thrust on the wheel hub and, on the other hand, are constrained to the wheel holder. The wheel holder is rotatably mounted on the base to allow rotation of the wheel about a vertical axis passing through the main shaft of the wheel holder itself. An example of a known wheel holder is described in European patent no. EP3357712B1.

In detail, an electric motor is positioned in the base of the tire changer, which provides the torque required for rotation of the main shaft and turnplate. The motion of the electric motor may be transmitted to the turnplate via a belt transmission or via a transmission with a mechanical reduction gear. In tire changers with belt transmission, the electric motor is provided with a pulley connected by means of a V-belt to a second pulley keyed to an auxiliary shaft connected to the main shaft integral with the turnplate: when the motor is activated, it transmits the motion to the auxiliary shaft, which transmits the motion to the main shaft and therefore to the turnplate. Rotation is controlled by means of a pedal or switch that activates the electric motor.

In the tire changer sector, various support and fixing systems for the electric motor are known, which significantly influence the simplicity of assembly, maintenance and mechanical reliability of the device.

Document US 2011/0100558 A1 describes a tire changer with belt transmission having an electric motor housed in the base and fixed to a vertical support plate, which is also fixed to an external casing of the transmission by means of a screw-and-bolt system. The support plate supports the electric motor in a position that allows torque transfer to the main shaft.

Document CN201442500U also describes a tire changer comprising a wheel holder having a vertical main shaft driven by an electric motor housed in the base of the tire changer. Document CN201442500U likewise shows a tire changer with belt transmission. The electric motor is directly fixed by means of screws and bolts to an inclined support plate positioned below the transmission casing and also rigidly fixed by means of screws and bolts to the lower part of the support plate. The support plate is fixed to the base and also supports the transmission to which the motor is connected. The assembly consisting of the electric motor, the plate and the transmission is assembled externally to the machine and subsequently mounted in the base.

Although the known tire changers described above are employed for the demounting and mounting of tires, the Applicant has found that they are not free from limitations. In fact, the known solutions provide for rigid fixing of the electric motor to the base or frame of the tire changer, a condition that renders assembly and maintenance operations of the tire changer rather complex. Accordingly, the Applicant has found that the known solutions are improvable in several respects.

### OBJECT OF THE INVENTION

The object of the present invention is to solve at least one of the drawbacks and/or limitations of the prior art solutions. The first object of the present invention is to make available a tire changer presenting a simple and compact structure, capable of ensuring low production and maintenance costs while at the same time being structurally robust.

It is further an object of the present invention to make available a tire changer that can be assembled easily and safely by an operator, and which is also capable of facilitating the maintenance activities thereof.

It is further an object of the present invention to make available a tire changer capable of effectively performing mounting and demounting operations of a tire from a rim of a wheel.

These objects and others, which will become more apparent from the following description, are substantially achieved by a tire changer and a process for installing and/or maintaining said tire changer in accordance with one or more of the appended claims.

### SUMMARY

Further aspects of the invention are described below.

In a 1st aspect, a tire changer (100) is provided for mounting and/or demounting a tire of a wheel of a vehicle, wherein the tire changer (100) comprises a base (2) which includes:
- a case (60) delimiting at least one compartment (V),
- a wheel holder (3) emerging from the case and presenting:
   ∘ a shaft (30) extending longitudinally between a first and a second end portion (30a, 30b) along an extension direction, wherein the first end portion (30a) is arranged in the compartment (V) while the second end portion (30b) is arranged outside the compartment (V),
   ∘ a turnplate (3b) carried by the shaft (30) at the second end portion (30b) and configured to receive a wheel of a vehicle,
- a mechanical transmission (40) arranged at least partially in the compartment (V) and connected to the shaft (30) at the first end portion (30a), wherein the mechanical transmission (40) is configured to allow rotation of the shaft (30) and the turnplate (3b) about an axis (Z) passing through the shaft (30),
- a motor (M) housed, in use condition of the tire changer, in the compartment (V) and connected to the mechanical transmission (40), wherein the motor (M) is configured to act on said mechanical transmission (40) to allow rotation of the shaft (30) and the turnplate (3b) about the axis (Z).

In a 2nd aspect according to the preceding aspect, the tire changer (100) comprises at least one support element (1) configured to engage and support the motor (M) in the compartment (V).

In a 3rd aspect according to the preceding aspect, said at least one support element (1) is constrained to the base (2).

In a 4th aspect according to any one of the two preceding aspects, the support element (1) is constrained to at least one of the case (60) and the transmission (40) of the base (2).

In a 5th aspect according to any one of the three preceding aspects, said at least one support element (1) is configured to define:
- a lock condition in which the support element fixes the motor (M) in a predetermined operating position relative to the transmission (40),
- a release condition in which the support element (1) is configured to guide a movement of the motor (M) along a direction exiting from the compartment (V).

In a 6th aspect according to the preceding aspect, the support element (1), in the lock condition, defines with the base (2) a constraint of a fixed constraint type.

In a 7th aspect according to any one of the two preceding aspects, the support element (1), in the release condition, defines with the base (2) a sliding constraint type or carriage type.

In an 8th aspect according to any one of the three preceding aspects, the support element (1) and the base (2), in the release condition, are configured to allow at least one of: a translation of the motor along a direction transverse to the axis (Z) of rotation of the shaft (30), a rotation of the motor (M) optionally about an axis transverse to the axis (Z) of rotation of the shaft (30).

In a 9th aspect according to any one of the seven preceding aspects, the at least one support element (1) comprises:
- a first support (10) constrained to the base (2) and arranged at least partially in the compartment (V),
- a second support (20) engaged, on the one hand, to the motor (M) and, on the other hand, to the first support (10).

In a 10th aspect according to the preceding aspect, the first support (10) is fixed to the base (2), optionally fixed to the case (60).

In an 11th aspect according to any one of the two preceding aspects, the second support (20) is constrained only directly to the first support (10).

In a 12th aspect according to any one of the three preceding aspects, the second support (20) is not directly constrained to the base (2).

In a 13th aspect according to any one of the four preceding aspects, the first and second support (10, 20) are configured to define:
- a lock condition in which the first and second supports are fixed to each other,
- a release condition in which the first and second supports are movable relative to each other to allow movement of the motor (M) relative to the base (2).

In a 14th aspect according to the preceding aspect, the first support (10), in the lock and release condition, is fixed relative to the base (2).

In a 15th aspect according to any one of the two preceding aspects, the second support (20), in the lock condition, is fixed relative to the base (2).

In a 16th aspect according to any one of the three preceding aspects, the second support (20), in the release condition, is movable relative to the first support (10) and relative to the base (2).

In a 17th aspect according to any one of the four preceding aspects, the second support (20), in the release condition, is movable at least between:
- a first operating position, in which the second support (20) together with the motor (M) fixed to the second support (20) are fully arranged in the compartment (V),
- a second operating position, in which at least one of said second support (20) and said motor (M) are at least partly arranged outside the compartment (V).

In an 18th aspect according to any one of the five preceding aspects, the second support (20), in the release condition, is movable relative to the base (2) according to at least one of the following modes: translation, rotation, roto-translation.

In a 19th aspect according to any one of the six preceding aspects, when combined with the 17^{th} aspect, the first support (10), in the release condition, supports the second support (20) and the motor (M) and is configured to guide the movement of said second support (20) between the first and second operating positions.

In a 20th aspect according to any one of aspects from the 9th to the 19th, the first support (10) is fixed to the base (2).

In a 21st aspect according to any one of aspects from the 9th to the 20th, the first support (10) comprises a first constraining portion (11) configured to engage the second support (20).

In a 22nd aspect according to any one of aspects from the 9th to the 21st, at least one of the first support (10) and the base (2) comprises a second constraining portion (12) also configured to engage the second support.

In a 23rd aspect according to any one of aspects from the 9th to the 22nd, the second support (20) comprises a respective first and second constraining portion (21, 22).

In a 24th aspect according to the preceding aspect, the first constraining portion (21) of the second support (20) is configured to engage the first constraining portion (11) of the first support (10).

In a 25th aspect according to any one of aspects from the 9th to the 24th, the second constraining portion (22) of the second support (20) is configured to engage the second constraining portion (12) defined on at least one of the base (2) and the first support (10).

In a 26th aspect according to any one of the three preceding aspects, the second constraining portions (12, 22), in the lock condition, are configured to fix the motor (M) to the base (2).

In a 27th aspect according to any one of the four preceding aspects, the first and second constraining portions, in the lock condition of the first and second supports (10, 20), are engaged with each other to prevent relative movement of said first and second supports.

In a 28th aspect according to any one of the five preceding aspects, only the first constraining portions (11, 21) are engaged with each other in the release condition of the first and second support.

In a 29th aspect according to any one of the six preceding aspects, the second constraining portions (12, 22) are disengaged from each other in the release condition of the first and second support.

In a 30th aspect according to any one of the seven preceding aspects, the first constraining portions (11, 21) are configured to define a constraint between the first and second support of carriage type and/or sliding constraint type. In a 31st aspect according to any one of the eight preceding aspects, the first constraining portions (11, 21), in the release condition, are configured to allow at least one of:
- a relative rotation between the first and second support (10, 20),
- a relative translation (optionally a relative sliding) between said first and second support (10, 20).

In a 32nd aspect according to any one of the nine preceding aspects, the first constraining portions (11, 21), in the release condition, are configured to define a carriage type constraint between said first and second support.

In a 33rd aspect according to any one of the ten preceding aspects, the first constraining portions (11, 21), in the release condition, are configured to allow a relative rotation and translation between said first and second support (10, 20).

In a 34th aspect according to any one of aspects from the 9th to the 33rd, the first support (10) comprises at least one plate.

In a 35th aspect according to any one of aspects from the 20th to the 34th, the first constraining portion (11) of the first support (10) comprises at least one of: a guide, a groove, a cylindrical seat.

In a 36th aspect according to any one of aspects from the 20th to 35th, the first constraining portion (11) of the first support (10) comprises at least one guide configured to engage the first constraining portion (21) of the second support.

In a 37th aspect according to the preceding aspect, the guide of the first constraining portion (11) of the first support (10) is configured to receive and support the first constraining portion (21) of the second support (20) so as to support said second support (20) and the motor (M) in the compartment (V) as well as to allow relative movement between the second support (20) and the first support (10).

In a 38th aspect according to any one of the two preceding aspects, the at least one guide comprises a groove, optionally of a through groove, defined on the plate of the first support (10).

In a 39th aspect according to any one of the three preceding aspects, the at least one guide, optionally the groove, extends along a rectilinear direction, optionally orthogonal to the axis (Z) of rotation of the shaft (30).

In a 40th aspect according to any one of aspects 21 onwards, the second constraining portion (12) defined on at least one of the first support (10) and the base (2) comprises at least one screw-and-bolt system configured to fix the second support.

In a 41st aspect according to any one of aspects from the 23rd to the 40th, the second support (20) comprises a base body (25), for example comprising a plate.

In a 42nd aspect according to the preceding aspect, the first constraining portion (21) of the second support (20) comprises at least one of: a cylindrical body, a spherical body.

In a 43rd aspect according to the preceding aspect, the first constraining portion (21) of the first support is engaged, in the release condition, to the guide defining the first constraining portion (11) of the first support, wherein said first constraining portions (11, 21) are configured to cooperate with each other to allow:
- rotation of the second support (20) relative to the first support (10) fixed to the base,
- translation of the second support (20) relative to the first support (10) fixed to the base.

In a 44th aspect according to any one of the two preceding aspects, the first constraining portion (21) of the second support (20) comprises at least one of: a cylindrical pin, a bearing, a ball, a roller.

In a 45th aspect according to any one of aspects from the 41st to the 44th, the second constraining portion (22) of the second support (20) comprises at least one through opening defined on the base body (25), optionally on the plate of the second support (20), configured to allow engagement of the screw-and-bolt system with said base body. In a 46th aspect according to the preceding aspect, the at least one through opening defined on the base body (25) is configured to allow the passage of a screw and the subsequent locking of the base body to the screw by means of one or more bolts, for example by means of a nut and counter-nut.

In a 47th aspect according to any one of aspects from the 9th to the 46th, the at least one plate of the first support (10) is fixed to the base (2) at the mechanical transmission (40).

In a 48th aspect according to any one of aspects the 9th to the 48th, the plate of the first support (10) is arranged, in use condition of the tire changer, below the wheel holder (3).

In a 49th aspect according to any one of aspects the 9th to the 49th, the plate of the first support (10) is arranged at the first end portion (30a) of the shaft (30).

In a 50th aspect according to any one of the preceding aspects, the base (2) extends between a front portion (2a) and a rear portion (2b) along an extension direction.

In a 51st aspect according to the preceding aspect, the extension direction of the base (2) is, in use, substantially horizontal.

In a 52nd aspect according to any one of aspects from the 35th to the 51st, the guide defining the first constraining portion (11) of the first support (10) extends, in use, along a substantially horizontal direction.

In a 53rd aspect according to any one of the three preceding aspects, the support element (1) is arranged substantially at the front portion (2a) of the base (2).

In a 54th aspect according to any one of the four preceding aspects, the guide defining the first constraining portion of the first support extends along a direction substantially parallel to the extension direction of the base (2).

In aspect 54bis according to any one of aspects the 9th to the 54th, the second support (20) in the release condition is movable:
- by rotation relative to the first support towards and away from the wheel holder (3),
- by translation towards and away from the front portion (2a) of the base (2).

In a 55th aspect according to any one of the five preceding aspects, the base body (25), optionally the plate, of the second support extends between a respective front portion (25a) and a rear portion (25b).

In a 56th aspect according to the preceding aspect, the first constraining portion (21) of the second support (20) is defined at the rear portion (25b) of the base body while the second constraining portion (22) of the second support is defined at the front portion (25a) of the base body (25).

In a 57th aspect according to any one of the two preceding aspects, the base body (25), at least in the lock condition, presents the rear portion (25b) substantially facing towards the rear portion of the base (2) while the front portion (25a) faces towards the front portion (2a) of the base (2).

In a 58th aspect according to any one of aspects from the 41st to the 57th, the motor (M) is fixed to the base body (25), optionally by means of threaded fasteners.

In a 59th aspect according to any one of aspects the 9th to the 58th, the second support (20), at least in the lock condition, is interposed between the wheel holder (3) and the motor (M).

In a 60th aspect according to any one of aspects the 9th to the 59th, the motor, at least in the lock condition and in use condition of the tire changer, is arranged below the second support (20).

In a 61st aspect according to any one of aspects from the 41st to the 60th, the base body (25) comprises a plate presenting, in cross-section along a transverse plane connecting the front and rear portions of the base body, a profile substantially in an "L" shape.

In a 62nd aspect according to any one of aspects from the 35th to the 61st, the at least one guide comprises a first and a second guide arranged in opposition to each other with respect to a base body of the plate defining the first support (10).

In a 63rd aspect according to the preceding aspect, the first and second guide are parallel to each other.

In a 64th aspect according to any one of the two preceding aspects, the first end portion (30a) of the shaft (30) is arranged substantially between said first and second guide of the first support (10).

In a 65th aspect according to any one of the three preceding aspects, the first constraining portion (21) of the second support (20) comprises a first and a second roller respectively engaged with the first and second guide of the first support.

In a 66th aspect according to any one of the preceding aspects, the mechanical transmission (40) is a belt transmission.

In a 67th aspect according to any one of the preceding aspects, the mechanical transmission (40) comprises:
- a transmission member (46), optionally a gear wheel, connected to the first end portion (30a) of the shaft (30),
- an auxiliary shaft (41) engaged with the transmission member,
- at least one rotating element (42) keyed to the auxiliary shaft (41),
- a drive element (43) configured to operatively connect the rotating element (42) with an output shaft of the motor (M).

In a 68th aspect according to the preceding aspect, the motor (M) comprises an output shaft to which a rotating element (M1) is keyed, wherein the rotating element is operatively connected to the rotating element (42) keyed to the auxiliary shaft (41) by means of the drive element (43).

In a 69th aspect according to any one of the two preceding aspects, the auxiliary shaft (41) is parallel to the output shaft of the motor (M).

In a 70th aspect according to any one of the three preceding aspects, the auxiliary shaft (41) is orthogonal to the axis (Z) of rotation of the shaft (30) of the wheel holder (3).

In a 71st aspect according to any one of the four preceding aspects, the transmission member (46) lies on a plane orthogonal to the axis (Z) of rotation of the shaft (30) of the wheel holder (3).

In a 72nd aspect according to any one of the five preceding aspects, the transmission member (46) is keyed to the shaft (30) of the wheel holder (3) at the first end portion (30a).

In a 73rd aspect according to any one of the six preceding aspects, the auxiliary shaft (41) is arranged substantially in the plane of the transmission member (46).

In a 74th aspect according to any one of the seven preceding aspects, the rotating element (42) keyed to the auxiliary shaft (41) comprises at least one of: a pulley, a sprocket wheel, a gear wheel.

In a 75th aspect according to any one of the eight preceding aspects, the rotating element (M1) keyed to the output shaft of the motor (M) comprises at least one of: a pulley, a sprocket wheel, a gear wheel.

In a 76th aspect according to any one of the nine preceding aspects, the drive element (43) comprises at least one of: a chain, a belt, a gear wheel.

In a 77th aspect according to any one of the preceding aspects, the motor (M) comprises an electric motor.

In a 78th aspect according to any one of the preceding aspects, the shaft (30) comprises:
- a sleeve (32) engaged with the base (2) and rotatable relative thereto, the sleeve (32) comprising a seat,
- a stem (31) engaged in the seat of the sleeve and configured to rotate together with said sleeve about the axis (Z) of rotation of the wheel holder.

In a 79th aspect according to the preceding aspect, the stem (31) is slidably movable relative to the sleeve (32) between a plurality of operating positions, along a direction substantially parallel to the axis (Z) of rotation.

In an 80th aspect according to the preceding aspect, the stem (31) comprises a plurality of stops defined on an outer lateral surface of said stem (31), wherein the wheel holder (3) comprises a block (10), optionally carried by the sleeve (32), configured to engage at least one stop in order to lock the stem (31) in an operating position, preventing relative sliding between the sleeve (32) and the stem (31).

In an 81st aspect according to any one of the two preceding aspects, the turnplate (3b) is carried by the stem (31), optionally engaged at an end of the stem spaced from the sleeve (32).

In an 82nd aspect according to any one of the preceding aspects, the tire changer (100) further comprises:
- a frame (4) emerging from the base (2) along a direction substantially parallel to the axis of rotation (Z),
- at least one tool configured to operate on a rim and/or a tire of a wheel carried by the wheel holder (3).

In an 83rd aspect according to the preceding aspect, the frame (4) comprises at least one column (4a) emerging from the base (2) along a direction substantially parallel to the axis of rotation (Z).

In an 84th aspect according to any one of the two preceding aspects, the tire changer (1) comprises at least one device (5) which comprises:
- at least one arm (7) carried by the column, wherein said arm (7) extends between a front portion (7a) facing towards the axis of rotation (Z) and an opposed rear portion (7b),
- at least one tool (8) terminally carried by the arm (7) at the front portion (7a) and configured to operate on a rim and/or a tire of a wheel arranged on the wheel holder (3).

In an 85th aspect according to the preceding aspect, said device defines a first device (5), wherein the tire changer comprises at least one second device (6) comprising:
- at least one arm (70) carried by the column, wherein said arm (70) of the second device (6) extends between a front portion (70a) facing towards the axis of rotation (Z) and an opposed rear portion (70b),
- at least one tool (80) terminally carried by the arm (70) at the front portion (70a) and configured to operate on a rim and/or a tire of a wheel carried by the wheel holder (3), wherein said tool (80) of the second device (6) is opposed to the tool (8) of the first device (5) with respect to the ideal median plane of the tire changer (1).

In an 86th aspect according to any one of the two preceding aspects, the frame (4) is arranged at the rear portion (2b) of the base (2).

In an 87th aspect according to any one of the two preceding aspects, the tire changer (1) comprises at least one lifting actuator acting on at least one of said first and second device (5, 6), said lifting actuator being configured to allow movement of at least one of said first and second device (5, 6) relative to the base (2) along a direction substantially parallel to the axis of rotation (Z) of the wheel.

In an 88th aspect according to the preceding aspect, the at least one lifting actuator comprises a first and a second lifting actuator that are distinct and respectively independently acting on the first and second device (5, 6).

In an 89th aspect according to the preceding aspect, the first lifting actuator is configured to move the first device (5) along the column (4a) towards and away from the base (2).

In a 90th aspect according to any one of the two preceding aspects, the second lifting actuator is configured to move the second device (6) along the column (4a) towards and away from the base (2).

In a 91st aspect according to any one of the preceding aspects, the wheel mountable on the wheel holder (3) is of the type comprising:
- a rim comprising a hub configured to allow mounting of the rim on the vehicle and a first and second opposed peripheral edge configured to allow engagement of a tire,
- a tire comprising:
   ∘ a first bead configured to engage with the first peripheral edge of the rim,
   ∘ a second bead configured to engage with the second peripheral edge of the rim,
   ∘ a tread configured to define, in conditions of use on a vehicle, the contact element of the tire with the road surface,
   ∘ a first sidewall connecting the first bead to the tread,
   ∘ a second sidewall connecting the second bead to the tread.

In a 92nd aspect according to the preceding aspect, the tool (8) of the first device (5) comprises a mounting-demounting tool configured to be interposed radially between the first peripheral edge of the rim and the first bead of the tire to allow engagement-disengagement of said first bead with/from the first peripheral edge of the rim.

In a 93rd aspect according to any one of the two preceding aspects, the tool (80) of the second device (6) comprises a bead-breaking tool configured to act on and thrust the first bead of the tire to allow at least partial detachment of said first bead from the first peripheral edge of the rim.

In a 94th aspect according to the preceding aspect, the bead-breaking tool comprises a rotating body configured to define with the tire a rolling friction, the rotating body being configured to rotate about its own axis in an operating condition in which the wheel rotates about the axis of rotation (Z) and the rotating body contacts the tire.

In a 95th aspect according to the preceding aspect, the rotating body comprises at least one selected from: a disc, a cylinder, a sphere.

In a 96th aspect according to any one of the preceding aspects, the extension direction of the shaft (31) of the wheel holder (3) is parallel to the axis of rotation (Z).

In a 97th aspect according to any one of the two preceding aspects, the wheel holder (3) emerges from the base (2) at a portion interposed between the front portion and the rear portion of said base (2).

In a 98th aspect, a use of the tire changer according to any one of the preceding aspects is provided for mounting and/or demounting a tire from a rim of a wheel of a vehicle.

In a 99th aspect according to the preceding aspect, the wheel being of the type in accordance with the 91st aspect. In a 100th aspect, a process is provided for installing and/or maintaining a motor of a tire changer in accordance with any one of aspects 1 to 97. In a 101st aspect according to the preceding aspect, the process comprises the steps of:
- defining at least one access opening on the base (2) to allow access to the compartment (V),
- disengaging at least a part of the support element (1) from the base (2) in such a way as to allow relative movement between said base and at least a part of the support element,
- moving at least a part of said support element (1) towards the access opening.

In a 102nd aspect according to the preceding aspect, the process is a process for installing the motor in the compartment and comprises the steps of:
- following movement of at least a part of said support element (1) towards the access opening, constraining the motor to the support element (1),
- moving at least a part of said support element (1) in an entering direction into the compartment so as to arrange the motor in the base,
- constraining the motor (M) to the mechanical transmission.

In a 103rd aspect according to the preceding aspect, the tire changer is in accordance with any one of aspects from the 9th to the 97th, the step of disengaging at least a part of the support element (1) from the base (2) comprises the steps of disengaging only the second constraining portion (22) of the second support (20) from the second constraining portion defined on at least one of the first support and the base.

In a 104th aspect according to any one of the two preceding aspects, during movement of at least a part of said support element (1) relative to the base, the first constraining portions (11, 21) of the first and second support element are engaged with each other to allow relative rotation and translation movement of said support elements.

In a 105th aspect according to the 100th or 101st aspect, the process is a process for maintaining the motor arranged in the compartment (V) of the base (2) and comprises the steps of:
- following the step of disengaging at least a part of the support element (1) from the base (2), disengaging the motor (M) from the mechanical transmission (40),
- thereafter, moving at least a part of said support element (1) carrying said motor towards the access opening,
- optionally dismounting the motor from the support element (1) or performing maintenance work on said motor. In a 106th aspect according to the preceding aspect, the maintenance process further comprises the steps of:
- moving at least a part of said support element (1) carrying the motor in an entering direction into the compartment so as to arrange the motor in the base,
- fixing the support element and therefore the motor relative to the base.

In a 107th aspect according to any one of the two preceding aspects, the tire changer is in accordance with any one of aspects from the 9th to the 97th, the step of disengaging at least a part of the support element (1) from the base (2) comprises the steps of disengaging only the second constraining portion (22) of the second support (20) from the second constraining portion defined on at least one of the first support and the base.

In a 108th aspect according to any one of the three preceding aspects, during movement of at least a part of said support element (1) relative to the base, the first constraining portions (11, 21) of the first and second support element are engaged with each other to allow relative rotation and translation movement of said support elements.

In a 109th aspect according to any one of aspects from the 100th to the 108th, during the steps of moving the support element (1) relative to the base, the support element is placed in the release condition.

In a 110th aspect, a support element (1) is provided for a motor (M) of a tire changer (100), said support element (1) comprising:
- a first support (10) engageable to a base (2) of a tire changer within a compartment (V),
- a second support (20) engaged to the first support (10) and configured to engage a motor (M) of a tire changer, wherein the first and second support (10, 20) are configured to define:
- a lock condition in which the first and second supports are fixed to each other,
- a release condition in which the first and second supports are movable relative to each other to allow movement of the motor (M) relative to the base (2) of the tire changer,
wherein the second support (20), in the release condition, is movable relative to the first support (10) according to at least one of the following modes: translation, rotation, roto-translation.

In a 111th aspect according to the preceding aspect, the first support (10), in the release condition, supports the second support (20) and is configured to guide the movement of said second support (20) at least between a first and a second operating position.

In a 112th aspect according to any one of the two preceding aspects, the first support (10) is fixable to the base (2).

In a 113th aspect according to any one of aspects from the 100th to the 112th, the first support (10) comprises a first constraining portion (11) configured to engage the second support (20).

In a 114th aspect according to any one of aspects from the 100th to the 113th, at least one of the first support (10) comprises a second constraining portion (12) also configured to engage the second support.

In a 115th aspect according to any one of aspects from the 100th to the 114th, the second support (20) comprises a respective first and second constraining portion (21, 22).

In a 116th aspect according to the preceding aspect, the first constraining portion (21) of the second support (20) is configured to engage the first constraining portion (11) of the first support (10).

In a 117th aspect according to any one of aspects from the 100th to the 116th, the second constraining portion (22) of the second support (20) is configured to engage the second constraining portion (12) of the first support (10).

In a 118th aspect according to any one of the three preceding aspects, the second constraining portions (12, 22), in the lock condition, are configured to fix the motor (M) relative to the first and second support.

In a 119th aspect according to any one of the four preceding aspects, the first and second constraining portions, in the lock condition of the first and second supports (10, 20), are engaged with each other to prevent relative movement of said first and second supports.

In a 120th aspect according to any one of the five preceding aspects, only the first constraining portions (11, 21) are engaged with each other in the release condition of the first and second support.

In a 121st aspect according to any one of the six preceding aspects, the second constraining portions (12, 22) are disengaged from each other in the release condition of the first and second support.

In a 122nd aspect according to any one of the seven preceding aspects, the first constraining portions (11, 21) are configured to define a constraint between the first and second support of carriage type and/or sliding constraint type.

In a 123rd aspect according to any one of the eight preceding aspects, the first constraining portions (11, 21), in the release condition, are configured to allow at least one of:
- a relative rotation between the first and second support (10, 20),
- a relative translation (optionally a relative sliding) between said first and second support (10, 20).

In a 124th aspect according to any one of the nine preceding aspects, the first constraining portions (11, 21), in the release condition, are configured to define a carriage type constraint between said first and second support.

In a 125th aspect according to any one of the ten preceding aspects, the first constraining portions (11, 21), in the release condition, are configured to allow a relative rotation and translation between said first and second support (10, 20).

In a 126th aspect according to any one of aspects from the 100th to the 125th, the first support (10) comprises at least one plate.

In a 127th aspect according to any one of aspects the 100th to the 126th, the first constraining portion (11) of the first support (10) comprises at least one of: a guide, a groove, a cylindrical seat.

In a 128th aspect according to any one of aspects the 100th to the 127th, the first constraining portion (11) of the first support (10) comprises at least one guide configured to engage the first constraining portion (21) of the second support.

In a 129th aspect according to the preceding aspect, the guide of the first constraining portion (11) of the first support (10) is configured to support the first constraining portion (21) of the second support (20) so as to support said second support (20) as well as to allow relative movement between the second support (20) and the first support (10).

In a 130th aspect according to any one of the two preceding aspects, the at least one guide comprises a groove, optionally through type groove, defined on the plate of the first support (10).

In a 131st aspect according to any one of the three preceding aspects, the at least one guide, optionally the groove, extends along a rectilinear direction, optionally orthogonal to the axis (Z) of rotation of the shaft (30).

In a 132nd aspect according to any one of aspects the 100th to the 131st, the second support (20) comprises a base body (25), for example comprising a plate.

In a 133rd aspect according to the preceding aspect, the first constraining portion (21) of the second support (20) comprises at least one of: a cylindrical body, a spherical body.

In a 134th aspect according to the preceding aspect, the first constraining portion (21) of the first support is engaged, in the release condition, to the guide defining the first constraining portion (11) of the first support, wherein said first constraining portions (11, 21) are configured to cooperate with each other to allow:
- rotation of the second support (20) relative to the first support (10),
- translation of the second support (20) relative to the first support (10).

In a 135th aspect according to any one of the two preceding aspects, the first constraining portion (21) of the second support (20) comprises at least one of: a cylindrical pin, a bearing, a ball, a roller.

In a 136th aspect according to any one of aspects the 100th to the 135th, the second constraining portion (22) of the second support (20) comprises at least one through opening defined on the base body (25), optionally on the plate of the second support (20), configured to allow engagement of a screw-and-bolt system.

In a 137th aspect according to the preceding aspect, the at least one through opening defined on the base body (25) is configured to allow the passage of a screw and the subsequent locking of the base body to the screw by means of one or more bolts, for example by means of a nut and counter-nut.

In a 138th aspect according to the preceding aspect, the tire changer (100) is of the type comprising a base (2) which includes:
- a case (60) delimiting at least one compartment (V),
- a wheel holder (3) emerging from the case and presenting:
   ∘ a shaft (30) extending longitudinally between a first and a second end portion (30a, 30b) along an extension direction, wherein the first end portion (30a) is arranged in the compartment (V) while the second end portion (30b) is arranged outside the compartment (V),
   ∘ a turnplate (3b) carried by the shaft (30) at the second end portion (30b) and configured to receive a wheel of a vehicle,
- a mechanical transmission (40) arranged at least partially in the compartment (V) and connected to the shaft (30) at the first end portion (30a), wherein the mechanical transmission (40) is configured to allow rotation of the shaft (30) and the turnplate (3b) about an axis (Z) passing through the shaft (30),
- a motor (M) housed, in use condition of the tire changer, in the compartment (V) and connected to the mechanical transmission (40), wherein the motor (M) is configured to act on said mechanical transmission (40) to allow rotation of the shaft (30) and the turnplate (3b) about the axis (Z).

In a 139th aspect according to any one of aspects the 100th to the 138th, the support element is in accordance with any one of aspects from the 2nd to the 97th.

In a 140th aspect, a process is provided for machining a wheel of a vehicle having a tire associable with a rim by means of a tire changer (1) according to any one of aspects from the 1st to the 97th.

In a 141st aspect according to the preceding aspect, the process comprises the following steps:
- placing a wheel in support on the wheel holder (3),
- locking the wheel to the wheel holder (3),
- setting the wheel holder (3), and consequently the wheel, in rotation about the axis (Z),
- contacting the wheel in rotation on the wheel holder (3) by means of at least one tool of the tire changer (1) to allow demounting of the tire from the rim or mounting of the tire on the rim.

### BRIEF DESCRIPTION OF THE DRAWINGS

Some embodiments and aspects of the invention will be described below with reference to the accompanying drawings, provided for illustrative purposes only and therefore not limiting, in which:
- Figure 1 is a perspective view of a tire changer;
- Figure 2 is a detail view of the tire changer of Figure 1;
- Figure 3 is a partially exploded view of a base of a tire changer;
- Figure 4 is a front view of a tire changer in accordance with the present invention;
- Figure 5 is a further detail view of a tire changer in accordance with the present invention;
- Figure 6 is a cross-sectional detail view of a part of a tire changer in accordance with the present invention;

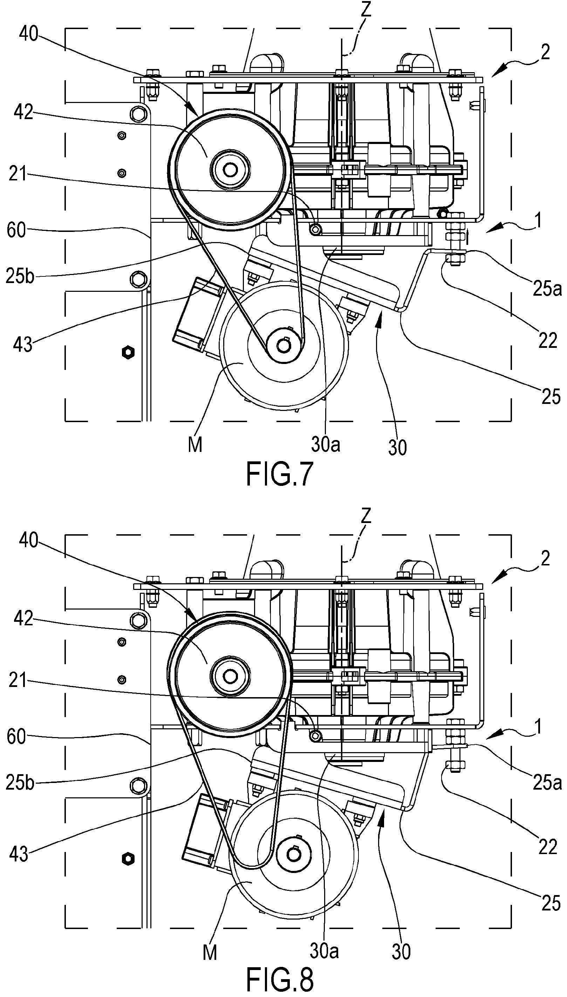

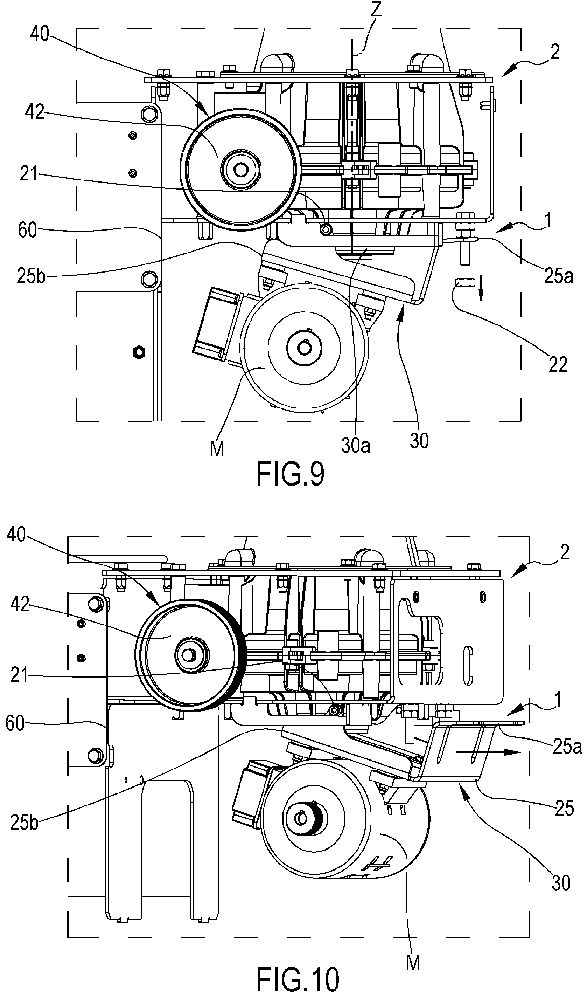

- Figures 7 to 10 show different operating conditions of a tire changer according to the present invention.

### DEFINITIONS AND CONVENTIONS

It is noted that in the present detailed description, corresponding parts illustrated in the various figures are indicated by the same reference numerals. The figures may illustrate the subject-matter of the invention by means of non-scale representations; accordingly, parts and components illustrated in the figures may relate exclusively to schematic representations.

The terms "horizontal" or "vertical" used in relation to components of the tire changer refer to a use condition thereof during which the tire changer performs, or may be used to perform, a mounting and/or demounting procedure of a tire from a rim of a wheel.

The tire changer described and claimed below may comprise/use at least one control unit responsible for controlling operating conditions implemented by the tire changer itself and/or for controlling the steps of the demounting and mounting procedure of a tire from a rim of a wheel. The control unit may be a single unit or may be formed by a plurality of separate control units depending on design choices and operational requirements.

By "control unit" is meant an electronic type component, which may comprise at least one of: a digital processor (CPU), an analogue type circuit, or a combination of one or more digital processors with one or more analogue type circuits. The control unit may be "configured" or "programmed" to execute certain steps: this may in practice be achieved by any means that allows the control unit to be configured or programmed. For example, in the case of a control unit comprising one or more CPUs and one or more memories, one or more programs may be stored in appropriate memory banks connected to the CPU or CPUs; the program or programs contain instructions that, when executed by the CPU or CPUs, program or configure the control unit to execute the operations described in relation to the control unit. Alternatively, if the control unit is or comprises analogue type circuitry, then the circuit of the control unit may be designed to include circuitry configured, in use, to process electrical signals in such a way as to execute the steps relating to the control unit.

Parts of the process described herein may be implemented by means of a data processing unit, or control unit, technically replaceable with one or more electronic computers designed to execute a portion of a software or firmware program loaded on a memory medium. Such software program may be written in any known type of programming language. The electronic computers, if two or more in number, may be connected to each other by means of a data connection such that their computing powers are shared in any manner whatsoever; the same electronic computers may therefore be installed in locations that are also geographically different, achieving a distributed computing environment by means of the aforementioned data connection.

The data processing unit, or control unit, may be a general purpose type processor configured to execute one or more parts of the process identified in the present disclosure through the software or firmware program, or may be an ASIC or a dedicated processor or an FPGA, specifically programmed to execute at least part of the operations of the process described herein.

The memory medium may be non-transitory and may be internal or external to the processor, or control unit, or data processing unit, and may specifically be a memory geographically located remotely with respect to the electronic computer. The memory medium may also be physically divided into several portions, or in cloud form, and the software or firmware program may physically provide portions stored on memory portions geographically divided from each other.

By "actuator" is meant any device capable of causing movement on a body, for example upon command of the control unit (and receipt by the actuator of a command sent by the control unit). The actuator may be of the electric type (for example an electric motor), pneumatic, mechanical (for example spring-loaded), hydraulic or of yet another type.

By "wheel" is meant an assembly comprising a rim coupled to a tire.

By "rim" is meant a component adapted to support a tire and comprising an anchoring zone where a hub is defined for engagement with an axle of a wheel of a vehicle. The rim comprises externally a seat, extending in a radially outer position and bounded axially by a first and a second peripheral edge: the tire is engaged at the seat.

By "tire" is meant any covering element, for example a multilayer covering element, mountable at the seat of a rim of a vehicle. The tire comprises:
- a first bead configured to engage with the first edge of the rim,
- a second bead configured to engage with the second edge of the rim,
- a tread configured to define the contact element of the tire with the ground,
- a first sidewall connecting the first bead to the tread,
- a second sidewall connecting the second bead to the tread.

The distance between the first or second bead and the tread essentially defines the height of the tire, while the distance between the first and second sidewall essentially defines the width of the tire, which substantially coincides with the width of the rim defined by the distance between the first and second edge described above.

### DETAILED DESCRIPTION

### Tire changer 100

Reference numeral 1 is used throughout to indicate a tire changer 100 for mounting and/or demounting a tire of a wheel of a vehicle.

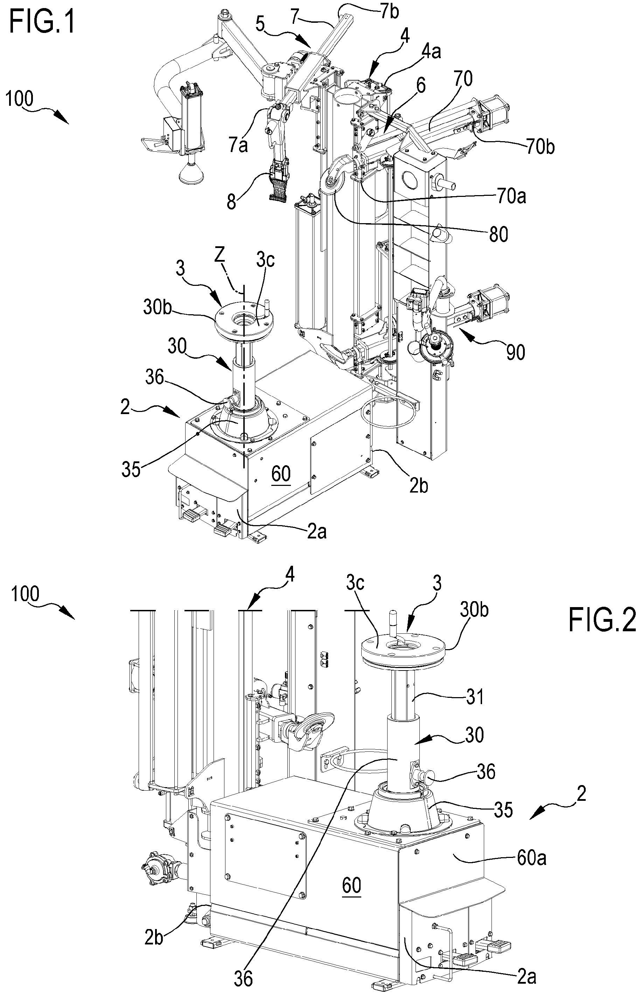

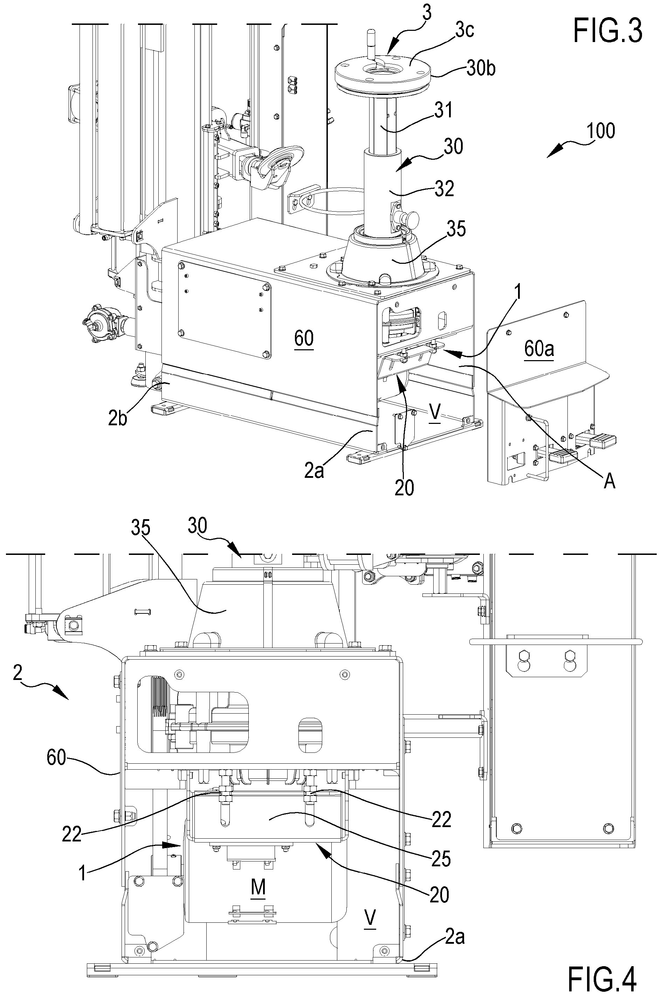

The tire changer 100 comprises a base 2 defining the support element for the various parts of the tire changer described below. The base 2 extends longitudinally between a front portion 2a and a rear portion 2b. The base 2 comprises a case 60 delimiting at least one compartment V in which components of the tire changer 100 described below are present. The case 60 may have a rectangular parallelepiped shape and may present at least one access A defined at one or more lateral walls of the case 60. For example, the case 60 may present a bottom wall from which a plurality of lateral walls emerge (for example a front wall, a rear wall and two lateral connecting walls); the case may further comprise a top wall opposed to the bottom wall. In the accompanying figures, a case has been illustrated comprising at least one access A, for example defined at a lateral wall or as in the example at the front wall; said access is closed by means of a removable portion 60a (Figures 2 and 3) of the case 60. The removable wall 60a is configured to allow a user to access the compartment V to work on one or more components.

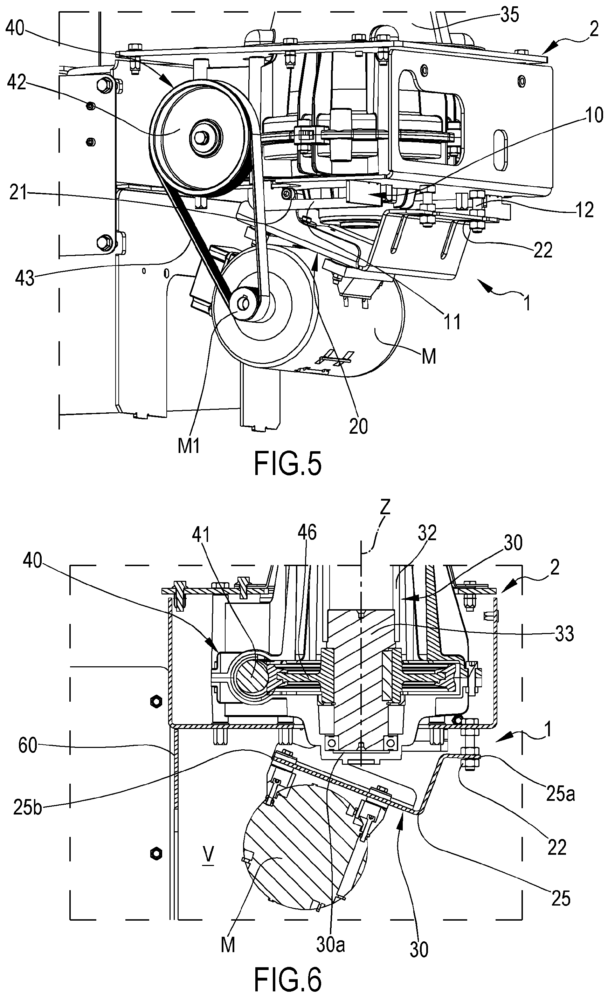

As schematically shown in Figure 6, the case further comprises a through opening defined at the top wall; said opening allows passage of a part of a wheel holder 3 described below. The case 60 may be made of metallic or plastic material with high mechanical resistance.

The tire changer 100 further comprises a wheel holder 3 coupled to the base 2. The wheel holder may be positioned between the front portion 2a and the rear portion 2 or at the front portion 2a. The wheel holder 3 is configured to receive and engage a wheel and allow its rotation about an axis Z, which is optionally vertical.

In detail, the wheel holder 3 emerges at least partly from the case 60 and comprises a shaft 30 extending longitudinally along an extension direction, between a first end portion 30a and a second end portion 30b. The first end portion 30a is arranged inside the compartment V, while the second end portion 30b emerges outside the case 60. The shaft 30 is configured to pass through the through opening defined on the top wall of the case 60.

At the end portion 30b, a turnplate 3b is connected, configured to receive the wheel of a vehicle and maintain it in position during mounting/demounting operations of the tire. The turnplate 3b may be provided with mechanical or pneumatic locking members.

In detail, the shaft 30 comprises a sleeve 32 defining a seat adapted to receive a stem 31, slidably movable between a plurality of operating positions. The stem 31, constrained to the sleeve 32 by means of a sliding constraint, presents a surface counter-shaped to the seat, for example of hexagonal shape, and a plurality of external stops. A block 36 carried by the sleeve 32 is configured to engage one of said stops and lock the stem 31 in a desired position, thereby adjusting the height of the turnplate 3b. As visible, the wheel holder 3 may further comprise a guide body 35 in tubular form, optionally with a circular cross-section; the guide body 35 may emerge from the base 2, parallel to the direction of rotation defined by axis Z, and surround at least in part the shaft 30, for example the sleeve 32, so as to essentially define a guard adapted to enclose and protect at least part of the shaft 30.

The tire changer 100 further comprises a mechanical transmission 40 situated at least partly inside the compartment V at the portion 30a of the shaft 30. The mechanical transmission 40 is configured to allow rotation of the shaft 30 and the turnplate 3b about the axis Z passing through the shaft 30. In fact, the mechanical transmission 40 is connected to the part of the shaft 30 arranged in the compartment V and allows its movement about the axis Z. In fact, the mechanical transmission 40 defines the component of the tire changer 100 configured to operatively connect one or more actuators with the shaft 30 to allow rotation. For example, the mechanical transmission 40 may comprise gears, pulleys, belts or transmission couplings. In the accompanying figures, by way of non-limiting example, a belt-type mechanical transmission 40 has been illustrated, and may comprise:
- a transmission member 46 (optionally a gear wheel) connected to the portion 30a;
- an auxiliary shaft 41 (for example a worm screw) engaged with the transmission member 46;
- a rotating element 42 (for example a pulley) keyed to the auxiliary shaft 41;
- a drive element 43 (for example a belt) connecting the rotating element 42 with a rotating element M1 (for example a pulley) keyed to the shaft of the motor M.

The possibility of employing a gear transmission or a transmission using a sprocket-and-chain system is obviously not excluded. Also other transmissions are not excluded.

The motor M may comprise an electric motor, selectable according to the torque required for the mounting/demounting operation. The motor M, in use condition of the tire changer, is housed in the compartment V and is connected to the transmission 40. For example, the motor M may be positioned below the mechanical transmission 40 and present an output shaft to which the rotating element M1 is keyed; the rotating element M1 is operatively connected (by means of the drive element 43) to the rotating element 42, which is keyed to the auxiliary shaft 41. For example, with the use of a belt-type mechanical transmission 40, the rotating element M1 keyed to the output shaft of the motor M comprises a pulley connected by means of a belt (drive element 43) to a further pulley (rotating element 42) keyed to the auxiliary shaft 41. In this configuration, the rotation of the output shaft of the motor M is transferred to the auxiliary shaft 41, which may comprise a worm screw. The auxiliary shaft 41 may be coupled to a gear wheel keyed directly to the shaft 30, thereby enabling the rotation of the auxiliary shaft 41 to be converted into a rotation of the shaft 30 of the wheel holder 3 about the axis Z.

The tire changer 100 further comprises a support element 1 configured to engage and support the motor M in the compartment V. The support element 1 is constrained to the base 2, for example to the case 60 and/or to the mechanical transmission 40, and is configured to define:
- a lock condition, in which the motor M is maintained in an operating position, for example fixed relative to the case 60;
- a release condition, in which the support element 1 is configured to guide a movement of the motor M along a direction exiting from the compartment V.

In detail, the motor M is fixed to the support element 1 which, in the release condition, is configured to allow displacement, for example from inside the compartment V towards and away from the access A of the case 60, to allow an operator to work on the motor M. In greater detail, a part of the support element 1 is fixed to the case 60 and/or to the mechanical transmission 40 (for example a transmission guard fixed relative to the case 60) while another part of the support element 1 (which is configured to receive and engage the motor M) is movable relative to the case 60, towards and away from the access A. In this way, as mentioned above, the operator can remove the removable wall to gain access to the support element 1 in order to bring the latter into the release condition such that one wall of said support element 1 configured to receive the motor M may be arranged at the access A (optionally at least partially outside the compartment V). This condition allows the operator to work on the motor engaged to the support element or to facilitate the installation of a new motor.

The support element 1 may comprise a first support 10 and a second support 20. The first support 10 is fixed to the base 2 and is arranged at least partly in the compartment V. The second support 20 is engaged to the motor M and to the first support 10. The second support 20 is movable relative to the first support 10 and is not directly constrained to the base 2. In the lock condition, the two supports (10 and 20) are fixed to each other and are fixed relative to the case 60; in the release condition, the first and second support 10, 20 are instead movable relative to each other. The support element 1, in the release condition, defines with the base 2 a sliding constraint type or carriage type, thereby allowing the support element to move relative to the base 2 by translation, rotation or roto-translation.

The first and second support 10, 20 are configured to define:
- a respective lock condition (corresponding to the lock condition of the support element) in which the first and second supports are fixed to each other,
- a respective release condition (corresponding to the release condition of the support element) in which the first and second supports 10, 20 are movable relative to each other to allow movement of the motor M relative to the base 2.

As mentioned above, the first support 10 is fixed to the base; accordingly, said first support 10, in both the lock and release condition of first and second support 10, 20, is fixed relative to the base 2. On the other hand, the second support 20, in the lock condition of the first and second support, is fixed relative to the base 2 (optionally fixed relative to the case 60 of the base) while, in the release condition of the first and second support, said second support is movable relative to the first support 10 and relative to the case 60 of the base.

In detail, the second support 20, in the release condition of the first and second support, is movable at least between:
- a first operating position, in which the second support 20 together with the motor M fixed to the second support 20 are fully arranged in the compartment V,
- a second operating position, in which at least one of said second support 20 and said motor M are at least partly arranged outside the compartment V, in particular may be placed at the access A of the case 60.

The second support 20, in the release condition of the first and second support, is movable relative to the base 2 according to at least one of the following modes: translation, rotation, roto-translation. In detail, the first support 10, in the release condition, supports the second support 20 and the motor M and is configured to guide the movement of said second support 20 between the first and second operating positions.

In greater detail, the first support 10 comprises a first constraining portion 11 configured to engage the second support 20. At least one of the first support 10 and the base 2 comprises a second constraining portion 12 also configured to engage the second support. In the accompanying figures, a tire changer has been illustrated in which the second constraining portion 12 is defined on the base 2, in particular on a fixed part of the case 60. The possibility of defining said constraining portion on the guard of the mechanical transmission 40 (another fixed part of the base) as well as on the first support 10 itself, which as noted above is fixed to the base 2, in particular to an internal part of the case 60, is not excluded.

The second support 20 comprises a respective first and second constraining portion 21, 22. The first constraining portion 21 of the second support 20 is configured to engage the first constraining portion 11 of the first support 10 while the second constraining portion 22 of the second support 20 is configured to engage the second constraining portion 12 defined on at least one of the base 2 and the first support 10.

The second constraining portions 12, 22, in the lock condition of the first and second support (and thus in the lock condition of the support 1), are configured to fix the motor M to the base 2. The first and second constraining portions, in the lock condition of the first and second supports 10, 20, are engaged with each other to prevent relative movement of said first and second supports. Instead, in the release condition of the first and second support (corresponding to the release condition of support 1) only the first constraining portions 11, 21 are engaged with each other, while the second constraining portions 12, 22 are disengaged from each other. The first constraining portions 11, 21 are configured, at least in the release condition, to define a constraint between the first and second support 10, 20 of carriage type and/or sliding constraint type so as to allow at least one of:
- a relative rotation between the first and second support 10, 20,
- a relative translation (optionally a relative sliding) between said first and second support 10, 20.

In the accompanying figures, by way of non-limiting example, a support element 1 has been illustrated in which the first constraining portions 11, 21, in the release condition, are configured to define a carriage type constraint between said first and second support to allow a relative rotation and translation between said first and second support 10, 20.

From a structural standpoint, the first support 10 comprises at least one plate. The first constraining portion 11 of the first support 10 comprises at least one of: a guide, a groove, a cylindrical seat. In detail, the first constraining portion 11 of the first support 10 comprises at least one guide configured to engage the first constraining portion 21 of the second support. The guide of the first constraining portion 11 of the first support 10, in the release condition of the first and second support, is configured to receive in support the first constraining portion 21 of the second support 20 so as to support said second support 20 and optionally the motor M in the compartment V as well as to allow relative movement between the second support 20 and the first support 10. The guide comprises at least one groove, optionally of a through type, defined on the plate of the first support 10, which extends along a rectilinear direction, optionally orthogonal to the axis Z of rotation of the shaft 30. In detail, the guide (optionally the at least one groove) extends along the plate of the first support 10 towards the access A of the case; in this way, the first support 10 can guide the movement of the second support 20 towards and away from the access A and therefore in an exiting/entering direction with respect to the compartment V.

In greater detail, the guide defining the first constraining portion 11 of the first support 10 extends, in use, along a substantially horizontal direction. In the accompanying figures, by way of non-limiting example, a support element 1 has been illustrated arranged substantially at the front portion 2a of the base 2 where the access A is located; the guide defining the first constraining portion 11 of the first support 10 extends along a direction substantially parallel to the extension direction of the base 2, i.e. towards the access A. In this configuration, the second support 20 in the release condition of the first and second support is movable:
- by rotation relative to the first support towards and away from the wheel holder 3,
- by translation towards and away from the front portion 2a of the base 2, in particular towards the access A.

The possibility of providing an access A defined on a different lateral wall and therefore a guide extending in the direction of said access A is obviously not excluded.

The at least one plate of the first support 10 is fixed to the base 2 at the mechanical transmission 40, in particular arranged, in use condition of the tire changer, below the wheel holder 3. For example, the plate of the first support 10 is arranged at the first end portion 30a of the shaft 30.

The second constraining portion 12 defined on at least one of the first support 10 and the base 2 comprises at least one screw-and-bolt system configured to fix the second support 20. In the accompanying figures, the screw-and-bolt system comprises two or more screws fixed to a fixed part of the base (optionally an internal plate carried by the case 60); on each screw, 3 nuts are engaged: one nut to lock the screw to the base and two further nuts configured to define a nut-and-counter-nut system which are configured to engage a part of the second support 20.

The second support 20 comprises a base body 25, for example comprising a plate. The base body 25, optionally the plate, of the second support extends between a respective front portion 25a and a rear portion 25b. In detail, the base body 25 may comprise a plate presenting, in cross-section along a transverse plane connecting the front and rear portions of the base body, a profile substantially in an "L" shape.

The first constraining portion 21 of the second support 20 is defined at the rear portion 25b of the base body while the second constraining portion 22 of the second support is defined at the front portion 25a of the base body 25. The base body 25, at least in the lock condition of the first and second support, presents the rear portion 25b substantially facing towards the rear portion of the base 2 while the front portion 25a faces towards the front portion 2a of the base 2.

The first constraining portion 21 of the second support 20 comprises at least one of: a cylindrical body, a spherical body. The first constraining portion 21 of the first support is engaged, in the release condition of the first and second support, to the guide defining the first constraining portion 11 of the first support 10: the first constraining portions 11, 21 are configured to cooperate with each other to allow, in the release condition of the first and second support:
- rotation of the second support 20 relative to the first support 10 fixed to the base,
- translation of the second support 20 relative to the first support 10 fixed to the base.

In detail, the first constraining portion 21 of the second support 20 comprises at least one of: a cylindrical pin, a bearing, a ball, a roller. In the accompanying figures, a first support 10 has been illustrated comprising two opposed grooves, which engage two respective rollers defining the first constraining portion of the second support 20. Rollers and grooves allow the first support 10 to support, even in the release condition, the second support inside the compartment V and further allow the relative rotation and translation of the second support 20 with respect to the first support 10. In even greater detail, such movement is permitted only following disengagement of the second constraining portions which allow the first and second support to be locked to each other. Therefore, once the second constraining portions 12, 22 are disengaged, the operator may exploit the mobility of the second support relative to the first in order to, firstly, disengage the motor from the mechanical transmission 40 for example by means of a relative rotation of the second support 20 with respect to the first support 10 and thereafter translate said second support in the direction of the access A.

The second constraining portion 22 of the second support 20 may comprise at least one through opening defined on the base body 25, optionally on the plate of the second support 20, configured to allow engagement of the screw-and-bolt system (second constraining portion 12) with said base body 25. The at least one through opening defined on the base body 25 is configured to allow the passage of a screw and the subsequent locking of the base body to the screw by means of one or more bolts, for example by means of a nut and counter-nut.

The motor M is fixed to the base body 25, optionally by means of threaded fasteners. The second support 20, at least in the lock condition, is interposed between the wheel holder 3 and the motor M while the motor, at least in the lock condition and in use condition of the tire changer, is arranged below the second support 20.

The tire changer 1 may further comprise a frame 4 also emerging from the base 2 substantially at the rear portion 2b (Figure 1) of the base. The frame 4 is fixed to the base 2 in a position distal from the wheel holder 3. The frame 4 extends predominantly along a direction substantially parallel to the axis of rotation Z. In Figure 1, a frame 4 has been illustrated extending, by way of non-limiting example, along a vertical direction. In detail, the frame 4 extends between a bottom portion located at the base 2 and a top portion opposed to the bottom portion.

The frame 4 supports at least one device configured to operate on a rim and/or on a tire to allow mounting and/or demounting of the latter on/from said rim. In the accompanying figures, by way of non-limiting example, a tire changer 100 has been illustrated comprising a first and a second device 5, 6 (see for example Figure 1) both configured to operate on a rim and/or on a tire to allow mounting and/or demounting of the latter on/from said rim.

The frame 4 may comprise at least one column 4a emerging from the base 2 along a direction parallel to the axis of rotation Z.

The first device 5 may comprise at least one arm 7 carried by the column 4a and extending between a front portion 7a facing towards the axis of rotation Z and an opposed rear portion 7b; the arm 7 of the first device 5 may be of the fixed type (i.e. presenting a preset length, not variable) or may be of the extensible type, i.e. configured to move at least said front portion 7a relative to the wheel holder 3 to vary a distance between said front portion 7a of the arm 7 of the first device 5 and the axis of rotation Z. At the front portion 7a, the arm 7 stably carries at least one tool 8 configured to operate on a rim and/or a tire of a wheel carried by the wheel holder 3.

The second device 6 comprises a respective arm 70 carried by the column and extending between a front portion 70a facing towards the axis of rotation Z and an opposed rear portion 70b; the arm 70 of the second device 6 may be fixed, i.e. presenting a preset length (not variable) or may be of the extensible type, i.e. configured to move at least said front portion 70a relative to the wheel holder 3 to vary a distance between said front portion 70a of the arm 70 of the second device 6 and the axis of rotation Z. At the front portion 70a, the arm 70 stably carries at least one tool 80 configured to operate on a rim and/or a tire of a wheel carried by the wheel holder 3.

The first and second device 5, 6 may be arranged in opposition to each other with respect to an ideal median plane of the tire changer; accordingly, the arms 7, 70 and tools 8, 80 of said devices may also be opposed to each other with respect to said ideal median plane.

The first and second device 5, 6 may comprise respective carriages configured to slide along the frame 4 to allow displacement of the arms 7, 70 towards and away from the turnplate 3b. Such movement may be controlled by an actuator (for example a pneumatic cylinder or a hydraulic cylinder). Each actuator may be controlled by a control unit. The tools of the first and second device 5, 6 may be identical to each other or may present a different structure and function. In the accompanying figures, by way of non-limiting example, a tool 8 of the first device 5 has been illustrated comprising a mounting-demounting tool configured to be interposed radially between the first peripheral edge of the rim and the first bead of the tire to allow engagement-disengagement of said first bead from the first peripheral edge of the rim.

The tool 80 of the second device 6 may therefore comprise a mounting-demounting tool similar to that of the first device 5 or may comprise, as illustrated in Figure 1, a pressing element configured to act and thrust on the first bead of the tire to allow at least partial detachment of said first bead from the first peripheral edge of the rim. The pressing element comprises a rotating body configured to define with the tire a rolling friction; the rotating body is configured to rotate about its own axis in an operating condition in which the wheel rotates about the axis of rotation Z and the rotating body contacts the tire. The rotating body comprises at least one selected from: a disc, a cylinder, a sphere. As visible for example from Figure 1, the tire changer 100 may further comprise a third device 90 whose structure is similar to that of the second device 6; in fact, the third device 90 is defined by a further pressing element placed, in use conditions of the tire changer, below the second device 6 and adapted to act on the second bead of the tire to allow at least partial detachment of said second bead from the second peripheral edge of the rim. The third device may also be movable along the second column 4b by means of a carriage, independently movable from the carriage of the first and second device 5, 6.

In detail, the tire changer 1 according to the present invention may comprise a first and second device respectively in accordance with the description of the first and second device of the tire changer apparatus of patent application no. EP 4 067 121 A1, as described at paragraphs [0114]-[0177] of EP 4 067 121 A1. Alternatively, the tire changer 1 according to the present invention may comprise a first and second device respectively in accordance with the description of the first and second device of the tire changer apparatus of patent application no. EP 3 865 321 A1, as described at paragraphs [0110]-[0140] of EP 3 865 321 A1.

The tire changer 1 according to the present invention may further comprise a third device in accordance with the description of the third device of the tire changer apparatus of patent application no. EP 4 067 121 A1, as described at paragraphs [0178]-[0202] of EP 4 067 121 A1. Alternatively, the tire changer 1 according to the present invention may further comprise a third device in accordance with the description of the third device of the tire changer apparatus of patent application no. EP 3 865 321 A1, as described at paragraphs [0141]-[0149] EP 3 865 321 A1.

Of course the tire changer may comprise other or alternative tools not herein described.

### Process

The present invention also relates to a process for installing and/or maintaining the motor M within the compartment V of the tire changer 100 in accordance with the description provided above. The process comprises a step of defining an access A on the base 2 to access the compartment V. Such step may provide for the removal of the removable wall 60a of the case.

Subsequently, the process provides for a step of disengaging at least a part of the support element 1 from the base 2 in such a way that a part of said support element remains fixed to the case 60 while a remaining part is movable relative to the first. In greater detail, this step may provide for disengagement of the second constraining portions 12, 22 of the first and second support. Following disengagement of the second portions 12, 22, the process may provide for a step of moving the second support 20 with the motor M towards the access A. This movement step may allow at least a part of the second support 20 and/or the motor M to be arranged outside the compartment V.

The process may be a process for installing a motor M. In such case, the process, following movement of the second support at the access, may comprise the following steps:
- fixing the motor M to the second support 20;
- inserting the second support into the compartment V by virtue of engagement of the first portions 11, 21;
- connecting the motor to the mechanical transmission;
- engaging the second portions 12, 22 of the first and second support to fix the support element relative to the case 60.

In case of a maintenance process for the motor M arranged in the compartment V, the process provides for the following steps:
- defining the access A on the case;
- disengaging the second portions 12, 22 of the first and second support 10, 20;
- disengaging the motor M from the mechanical transmission 40, for example by means of a rotation of the second support 20 and the motor M relative to the case;
- moving the second support 20 and the motor M towards the access A by virtue of engagement of the first portions 11, 21 of the first and second support 10, 20;
- disengaging the motor M from the second support;
- performing maintenance work on the motor;
- re-fixing the motor M to the second support;
- re-inserting the second support 20 and the motor M into the compartment V by virtue of engagement of the first portions 11, 21.

During movement of the second support 20, the first constraining portions 11 and 21 remain engaged with each other and guide the movement of the second support 20, ensuring controlled and safe movement, which may include rotation, translation or roto-translation.

### Support element 1

Reference numeral 1 is used throughout to indicate a support element for a tire changer 100 for mounting and/or demounting tires from a rim of a wheel. The tire changer 100 may be of the type comprising a base 2, a mechanical transmission 40 and a motor M in accordance with what has been described above. The support element 1 is in accordance with what has been described above, i.e. configured to allow engagement of a motor M as well as movement of a part of said support element on which the motor is fixed relative to the case 60 in such a way as to allow positioning of said motor at an access of the base 2. In detail, the support element 1 comprises the first and second support 10, 20 described above.

### ADVANTAGES

The present invention provides important advantages over the solutions of the prior art. The presence of the support element 1 provides a highly functional tire changer, in which the motor M can be easily disengaged and moved as described above, optionally by virtue of the dual support structure 10, 20. The ability to perform translations or rotations of the support element, the use of simple but reliable mechanical constraints, and the accessibility through an internal compartment, make the tire changer 100 easy to inspect and repair, with a reduction in machine downtime.

## Claims

1. Tyre changer (100) for mounting and/or demounting a tyre of a wheel of a vehicle, wherein the tyre changer (100) comprises a base (2) which includes:
a case (60) delimiting at least one compartment (V),
a wheel holder (3) emerging from the case and presenting:
a shaft (30) extending longitudinally between a first and a second end portion (30a, 30b) along an extension direction, wherein the first end portion (30a) is arranged in the compartment (V) while the second end portion (30b) is arranged outside the compartment (V),
a turnplate (3b) carried by the shaft (30) at the second end portion (30b) and configured to receive a wheel of a vehicle,
a mechanical transmission (40) arranged at least partially in the compartment (V) and connected to the shaft (30) at the first end portion (30a), wherein the mechanical transmission (40) is configured to allow rotation of the shaft (30) and the turnplate (3b) about an axis (Z) passing through the shaft (30),
a motor (M) housed, in use condition of tyre changer, in the compartment (V) and connected to the mechanical transmission (40), wherein the motor (M) is configured to act on said mechanical transmission (40) to allow rotation of the shaft (30) and turnplate (3b) about the axis (Z),
wherein the tyre changer (100) further comprises at least one support element (1) constrained to the base (2) and configured to engage and support the motor (M) in the compartment (V), at least in the condition of use of the tyre changer,
**characterized by the fact that** the support element (1) is configured to define:
a lock condition in which the support element fixes the motor (M) in a predetermined operating position relative to the transmission (40),
a release condition in which the support element (1) is configured to guide a motor movement (M) along a direction exiting from the compartment (V).

2. Tyre changer according to claim 1, wherein the support element (1), in the lock condition, defines a constraint with the base (2) of a fixed constraint type, wherein the support element (1), in the release condition, defines with the base (2) a sliding constraint type or carriage constraint type.

3. Tyre changer according to any one of the preceding claims, wherein the support element (1) and the base (2), in the release condition, are configured to allow at least one of: a translation of the motor along a direction transverse to the axis (Z) of rotation of the shaft (30), a rotation of the motor (M) optionally about an axis transverse to the axis (Z) of rotation of the shaft (30).

4. Tyre changer according to any one of the preceding claims, wherein the at least one support element (1) comprises:
a first support (10) constrained to the base (2) and arranged at least partially in the compartment (V),
a second support (20) engaged, on the one hand, to the motor (M) and, on the other hand, to the first support (10).

5. Tyre changer according to claim 4, wherein the first support (10) is fixed to the case (60), wherein the second support (20) is only directly constrained to the first support (10).

6. Tyre changer according to claim 4 or 5, wherein the first and second support (10, 20) are configured to define:
a lock condition in which the first and second supports are fixed to each other,
a release condition in which the first and second supports are movable relative to each other to allow movement of the motor (M) relative to the base (2).

7. Tyre changer according to the preceding claim, wherein the first support (10), in the lock and release condition, is fixed relative to the base (2),
wherein the second support (20), in the lock condition, is fixed with respect to the base (2) while, in the released condition, it is movable with respect to the first support (10) and with respect to the base (2),
wherein the second support (20), in the release condition, is movable at least between:
a first operating position, in which the second support (20) together with the motor (M) fixed to the second support (20) are fully arranged in the compartment (V),
a second operating position, in which at least one of said second support (20) and said motor (M) are at least partly arranged outside the compartment (V).

8. Tyre changer according to claim 6 or 7, wherein the second support (20), in the release condition, is movable with respect to the base (2) according to at least one of the following modes: translation, rotation, roto-translation, wherein the first support (10), in the release condition, supports the second support (20) and the motor (M) and is configured to guide the movement of the second support (20) between the first and second operating positions.

9. Tyre changer according to any one of claims 4 to 8, wherein the first support (10) comprises a first constraining portion (11) configured to engage the second support (20), wherein at least one of the first support (10) and the base (2) comprises a second constraining portion (12) also configured to engage the second support, wherein the second support (20) comprises a respective first and second constraining portions (21, 22), wherein the first constraining portion (21) of the second support (20) is configured to engage the first constraining portion (11) of the first support (10) while the second constraining portion (22) of the second support (20) is configured to engage the second constraining portion (12) defined on at least one of the base (2) and the first support (10).

10. Tyre changer according to claim 9, wherein the second constraining portions (12, 22), in the lock condition of the first and second supports (10, 20), are configured to fix the motor (M) to the base (2), wherein the first and second constraining portions, in the lock condition of the first and second supports (10, 20), are engaged with each other to prevent relative movement of said first and second supports,
wherein the first constraining portions (11, 21) are engaged with each other in the release condition of the first and second support, wherein the first constraining portions (11, 21) are configured to define a constraint between the first and second support of carriage type and/or sliding type.

11. Tyre changer according to claim 9 or 10, wherein the first constraining portions (11, 21), in the release condition of the first and second supports (10, 20), are configured to allow at least one of:
a relative rotation between the first and second support (10, 20),
a relative translation between said first and second supports (10, 20).

12. Tyre changer according to claim 9 or 10 or 11, wherein the first support (10) comprises at least one plate,
wherein the first constraining portion (11) of the first support (10) comprises at least one guide configured to engage the first constraining portion (21) of the second support, wherein the guide of the first constraining portion (11) of the first support (10) is configured to receive in support the first constraining portion (21) of the second support (20) to support said second support (20) and said motor (M) in the compartment (V) as well as to allow relative movement between said second support (20) and said first support (10),
optionally wherein the first constraining portion (21) of the second support comprises at least one of: a cylindrical pin, a bearing, a ball, a roller.

13. Tyre changer according to the preceding claim, wherein the first constraining portion (21) of the first support is engaged, in the release condition, to the guide defining the first constraining portion (11) of the first support, wherein said first constraining portions (11, 21) are configured to cooperate with each other to enable:
the rotation of the second support (20) in relation to the first support (10) fixed to the base,
the translation of the second support (20) in relation to the first support (10) fixed to the base.

14. A process for installing and/or maintaining a motor of a tyre changer (100) according to any one of the preceding claims, wherein the process comprises:
defining at least one access opening on the base (2) to allow access to the compartment (V),
disengaging at least part of the support element (1) from the base (2) in such a way as to allow relative movement between that base and at least part of the support element,
moving at least part of said support element (1) closer to the access opening.
